Europäisches Patentamt

(19) European Patent Office    (11) Publication number: **0 221 750**
**B1**
Office européen des brevets

(12) # EUROPEAN PATENT SPECIFICATION

(45) Date of publication of the patent specification:    (51) Int. Cl.⁴: **F16D 65/22, F16D 51/22**
**31.01.90**

(21) Application number: **86308355.6**

(22) Date of filing: **27.10.86**

(54) Improved brake assembly and rotary cam member therefore.

(30) Priority: **28.10.85 US 791812**

(43) Date of publication of application:
**13.05.87 Bulletin 87/20**

(45) Publication of the grant of the patent:
**31.01.90 Bulletin 90/5**

(84) Designated Contracting States:
**DE FR GB**

(56) References cited:
**DE-A- 2 024 592**
**GB-A- 1 281 746**
**GB-A- 1 589 002**
**US-A- 1 865 042**
**US-A- 3 497 037**
**US-A- 3 837 446**

(73) Proprietor: **EATON CORPORATION, Eaton Center, 1111 Superior Avenue, Cleveland Ohio 44114(US)**

(72) Inventor: **Clark, James Robert, 409 Midlakes Boulevard, Plainwell Michigan 49080(US)**

(74) Representative: **Wright, Peter David John et al, R.G.C. Jenkins & Co. 26 Caxton Street, London SW1H 0RJ(GB)**

ACTORUM AG

## Description

### INTRODUCTION

This invention relates generally to an improved brake assembly of the type employing an "S" shaped rotary cam member and frictional linings for braking a rotating brake drum and more particularly where the cam member is provided with an improvement enabling an attractive increase in the thickness of the brake linings providing the assembly with an attractively extended working life.

### BACKGROUND OF THE INVENTION

Brake assemblies employing various types of rotary cam members for urging a frictional lining against a rotating brake drum to stop the drum from rotating have been known for many years particularly in vehicular applications where the brake drum is a part of the vehicle wheel assembly such as disclosed in United States Patents l,865,042 and 3,837,446, the disclosures of which are included herein by reference.

Of particular interest to this invention are brake assemblies employing a rotary cam member having an "S" shaped configuration such as disclosed in United States Patent 3,497,037, assigned to the assignee of the present invention and the disclosure of which is incorporated herein by reference. Such assemblies generally feature a pair of opposed brake shoes comprising support arms pivotally mounted at one end and having opposed spaced-apart free-ends with each having a layer of frictional material secured to a side thereof facing towards the brake drum. The rotary cam member has a central rotational axis intermediate the support member free-ends and resilient biasing means, such as coiled springs, are employed to urge the support member free-ends against the cam member.

The cam member is commonly mounted on a shaft journaled for rotation that has a suitable crank arm secured to it that is operatively connected to the brake such as by mechanical linkage or air or hydraulic cylinder components. Engagement of the brake by the operator causes the crank arm to rotate the shaft and the cam member which, in turn, spreads the support members apart for a distance to insure frictional engagement between the brake linings and brake drum sufficient to stop its rotation.

The working life of the assembly is a function of both the wearability of the frictional lining and its thickness of which the latter is addressed by the present invention. The maximum initial thickness of the frictional lining for a given brake drum is the distance between the support members and the brake drum reduced by an initial desired clearance between the lining and the brake drum when the brake is in a disengaged condition. With the brakes disengaged, the support member free-ends generally lie on opposite sides of the cam member in a plane through its rotational axis. The maximum distance between the support members and the brake drum in the brake disengaged condition is determined by the breadth of the cam member in a region adjacent to and bridging its rotational axis. Heretofore, such "S" shaped cam members have had a generally disc shaped cross-section including the region adjacent to and bridging their rotational axis resulting in a relatively broad breadth which, since disc drums generally have historically established fixed diameters, results in a smaller distance between the support members and the brake drum in the brake disengaged condition which in turn limits the initial thickness of the brake linings.

GB 1 281 746 discloses a brake assembly in which a greater expansion of the brake shoes is achieved.

This may allow the use of thicker brake linings. The brake assembly disclosed in this prior art document comprises two opposed brake shoes, each comprising a support member which carries a brake lining, and a rotary cam member located between the free ends of the two support members. The cam member includes a web portion and a flange portion substantially perpendicular to the web portion, and has camming surfaces thereon which urge apart the free ends of the support members when the cam member is rotated. However, the rotary S-cam member disclosed in the prior art document has three separate camming surfaces which engage with rollers on the ends of the brake shoes each having three cam engaging surfaces, of two different diameters. This involves the machining of several complex components, which is both time consuming and costly, in order to achieve a greater expansion of the brake shoes.

The present invention addresses the problem of providing brake linings of increased thickness for conventional brake drums for brake assemblies utilizing "S" shaped cam members and provides a means of substantially increasing their thickness without altering the function of the cam or the displacements involved in providing effective braking which, in turn, provides the brake assembly with attractively extended working life.

### SUMMARY OF THE INVENTION

Accordingly it is an object of this invention to provide an improved brake assembly employing a rotary "S" shaped cam member.

It is another object of this invention to provide an improved brake assembly utilizing an "S" shaped cam member that has been altered to provide brake linings of increased thickness for attractively extending the working life of the assembly.

It is still another objection of this invention to provide an improved brake assembly for braking conventional brake drums that utilize a rotary "S" shaped cam member that is adapted to enable a substantial increase in thickness of the brake linings without affecting braking ability of the assembly.

It is yet another object of the invention to provide an improved rotary "S" shaped cam member for use in brake assemblies for enabling an attractive increase in the thickness of frictional linings used in the assembly without affecting braking ability.

According to the invention there is provided a brake assembly for breaking a rotary brake drum, comprising two opposed brake shoes each comprising a support member carrying a brake lining, and a rotary cam member located between free ends of the two support members, the cam member including a web portion and a flange portion lying in a plane substantially perpendicular to the web portion, said cam member having opposed convex camming surfaces thereon of generally spiral form which urge the free ends of the support members apart when the cam member is rotated from a rest position, characterised in that said camming surfaces lie exclusively on the opposed major surfaces of the web portion of the cam member, and the flange portion of the cam member carries no camming surfaces.

## BRIEF DESCRIPTION OF THE DRAWINGS

FIGURE 1 shows a cut-away side elevation view of a prior-art brake assembly employing a conventional "S" shaped rotary cam member;

FIGURE 2 shows a partial side elevation view of the brake assembly of FIGURE 1 in which the conventional rotary cam member has been rotated by application of the brake;

FIGURE 3 shows a transverse view of a portion of the brake assembly of FIGURE 1;

FIGURE 4A shows a side elevation view of the conventional "S" shaped cam member of FIGURE 1;

FIGURE 4B shows a side elevation view of an embodiment of an improved "S" shaped rotary cam member of the invention;

FIGURE 4C shows a transverse sectional view of the improved "S" shaped rotary cam member of FIGURE 4B; and

FIGURE 5 shows a side elevation view of an embodiment of the improved brake assembly of the invention employing the improved rotary cam member of FIGURES 4B and 4C.

## DESCRIPTION OF SOME PREFERRED EMBODIMENTS

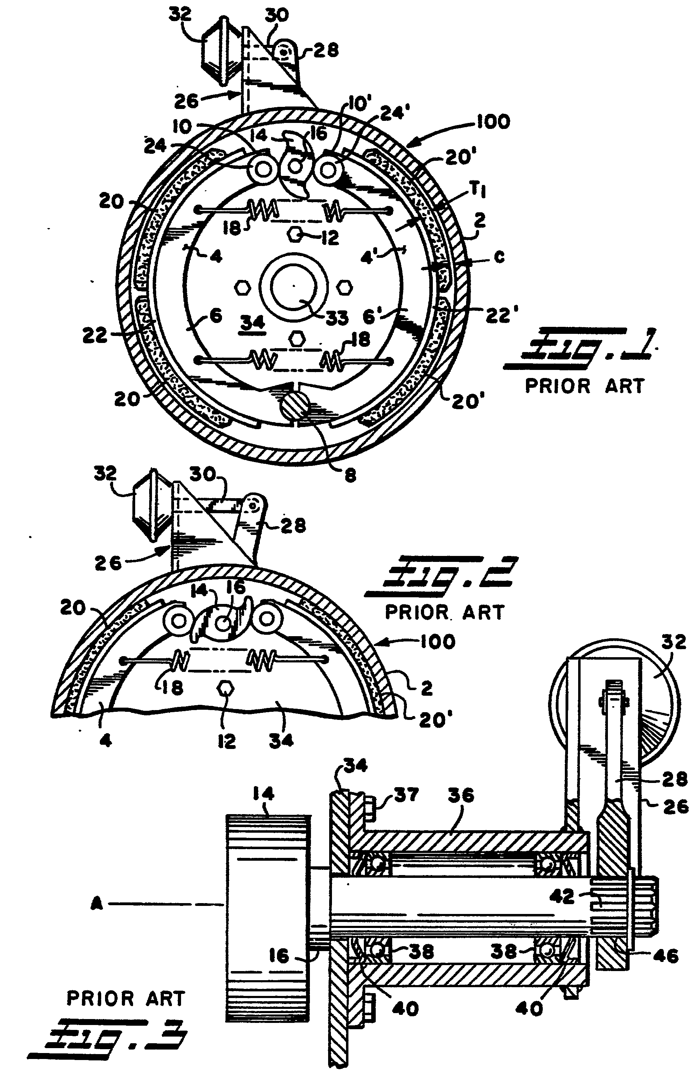

Brake assembly 100 of FIGURE 1 is a conventional type brake assembly commonly employed for example for braking a vehicular wheel. Assembly 100 has a pair of opposed arcuate brake shoes 4 and 4' respectively comprising support members 6 and 6' that are pivotly mounted at pin 8 at one end and have respective opposed spaced-apart free-ends 10 and 10' at the opposite end. Preferably, rollers 24 and 24' are respectively rotatably mounted at free-ends 10 and 10' of support members 6 and 6' for engagement with the rotary cam member and the words "free-end" as used herein includes such rollers where utilized in the assembly.

Brake assembly 100 is used to brake generally circular rotary brake drum 2 which includes a central opening 33 in plate 34 thereof for receiving the axle shaft and which is held stationary to the axle by suitable bolts 12. Brake assembly 100 is surrounded by circular rotary brake drum 2 and remains stationary while brake drum 2 rotates about brake shoes 4 and 4'.

Support members 6 and 6' have respective transverse flanges 22 and 22' to which are respectively secured dual brake lining pads 20 and 20' on the side thereof facing towards brake drum 2. Dual brake lining pads 20 and 20' are made from a suitable friction material well known to those skilled in the art of braking rotary brake drum and which are secured to support flanges 22 and 22' by bonding or rivets or other suitable techniques well known to those skilled in the art.

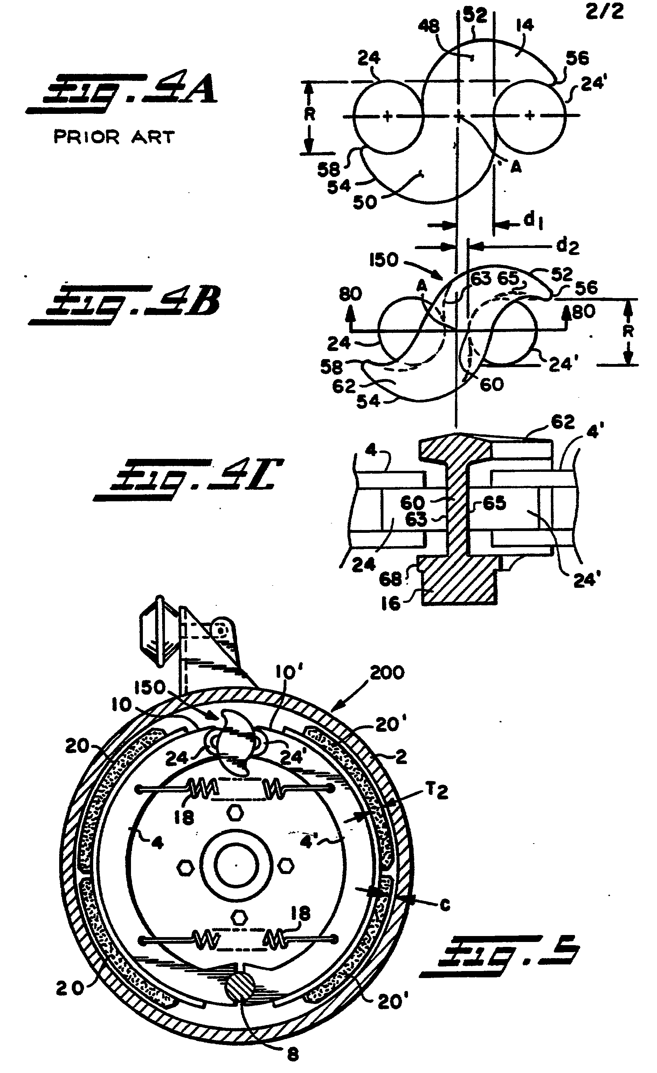

Assembly 100 includes a conventional rotary "S" shaped cam member 14 well known to those skilled in vehicular brake assembly art. Cam member 14 has a central rotational axis "A" shown in FIGURE 3 that is disposed intermediate free-ends 10 and 10' in the brake disengaged condition. Cam member 14 is mounted on and is rotated by shaft 16 shown in FIGURES 1 to 3. Rollers 24 and 24' of brake shoes 4 and 4' are respectively urged against opposite sides of cam member 14 by suitable resilient biasing means such as coiled springs 18 having their opposite ends secured to support members 6 and 6' of brake shoes 4 and 4' as shown in FIGURE 1.

It can readily be seen from FIGURE 1 that as cam member 14 rotates clockwise, free-ends 10 and 10' are forced-apart from each other while brake shoes 4 and 4' pivot about pin 8 which in turn urges dual brake lining pads 20 and 20' outwardly against brake drum 2 for a distance sufficient to insure stopping brake drum 2 from rotating.

Assembly 100 is shown in a brake disengaged condition in FIGURE 1 and in a brake engaged condition in FIGURE 2. In FIGURE 1, here is an initial desired clearance "C" between dual brake lining pads 20 and 20' and brake drum 2 in the brake disengaged condition.

Rotary cam member 14 is rotated by any suitable means operable to rotate cam member in the rotary direction and angular required to effectively stop drum 2 from rotating upon engagement of the braking by an operator.

As viewed in FIGURES 1 and 2, cam member 14 rotates clockwise from a brake disengaged condition in FIGURE 1 to a brake engaged condition in FIGURE 2. As evident in FIGURE 2, cam member 14 is able to rotate even further in a clockwise direction to make up for wear of brake pads 20 and 20'.

Although suitable mechanical linkages or hydraulic or pneumatic systems may be used to rotate cam member 14 in response to engagement of the brake, a commonly employed pneumatic system is shown in FIGURES 1, 2 and 3 for illustrative purposes.

In FIGURE 3, cam member 14 is secured to one end of shaft 16. Shaft 16 is rotatably mounted to housing 36 by spaced-apart bearings 38 which in turn is secured to plate 34 of brake drum 2 by suitable bolts 37. Suitable seals 40 may be included for protecting bearings 38 from contamination. The opposite end of shaft 16 contains splines 42 to which one end of eccentric crank arm 28 is secured and held axially by suitable means such as "C" clip 46. The opposite end of arm 28 is pivotly connected to rod 30 which is caused to move reciprocally by pneumatic bellows 32 shown in FIGURES 1 and 2. Thus, engagement of the brake provides pneumatic pressure within bellows 32 which causes rod 30 to move towards the viewer's right between FIGURES I and 2 which in turn rotates crank arm and shaft l6 and cam member l4 clockwise and vice versa when the brakes are disengaged. Such air actuated brake assemblies are commonly employed in truck applications.

Cam member l4, shown in greater detail in FIGURE 4A, is of the conventional type hereinbefore used having a generally disc shaped transverse cross-section at any point as shown in FIGURE 3. Cam member l4 has a pair of diametrically opposed arms 48 and 50 which respectively spiral in the same rotational direction outwardly away from central rotational axis "A" of cam member l4 and shaft l6 to respective peripheral ends 56 and 58. Arms 48 and 50 are oriented and are provided with respective diametrically opposed convex curved surfaces 52 and 54 facing in the same rotational direction that are adapted to respectively engage rollers 24 and 24′ of free-ends l0 and l0′ of support member 6 and 6′ and to move brake shoes 4 and 4′ away from each other the required distance upon engagement of the brake. The minimum breadth of width of cam member l4 in a distance "R" of contact between cam member l4 bridging rotational axis "A" and rollers 24 and 24′ is determinative of thickness "$T_1$", of brake pads 20 and 20′ as shown in FIGURE I when the brakes are in a disengaged condition. The minimum breadth of cam member l4 at axis "A" is represented by the distance $2d_1$, which is relatively large due to the disc shaped construction heretofore historically used for such "S" shaped cam members. The initial maximum thickness $T_1$ of brake pads 20 and 20′ is generally the maximum distance between the outward facing surfaces of flanges 22 and 22′ of support members 6 and 6′ and brake drum 2 reduced by a desired initial clearance "C′ when the brakes are in a disengaged condition with the maximum distance between flanges 22 and 22′ and brake drum 2 being a function of the breadth of cam member l4 in the distance "R" of contact hereinbefore described.

FIGURES 4B and 4C show an embodiment l50 of an improved rotary "S" shaped cam member that is adapted to enable a substantial increase in the thickness of the brake lining pads of assembly l00. As shown in FIGURE 4B, the breadth of cam member l50 in distance "R" of contact with rollers 24 and 24′ bridging rotational axis "A" has been reduced from the conventional disc shaped cross-section to a web shaped configuration such as web 6 shown in section 80-80 of FIGURE 4C having a minimum width $2d_2$ at axis "A′ that is substantially smaller than width $2d_1$ previously described. Web 60 has apposed surfaces 63 and 65 which face away from each other and extend outwardly away from axis "A" and merge respectively with initial convex surfaces 52 and 54 at a distance sufficiently inward of peripheral ends 56 and 58 to insure the outward displacements of brake shoes 4 and 4′ caused by rotation of cam member l50 remain substantially the same towards the latter part of the braking stroke. Due to its thinness, web 60 includes at least one transverse flange 62 adapted to provide web 60 with strength sufficient for suitable operation of cam member l50 in brake assemblies of the type herein described. Web 60 may have flanges 62 and 68 at its opposite edges to provide a "U" type cross section or have a flange 68 without flanges 62. Preferably, however, web 60 has at least transverse flange 62 as the end thereof spaced apart from shaft l6. Although flange 62 may have any suitable shape provided it imparts web 60 the strength required, flange 62 preferably has an "S" shaped configuration as shown in FIGURE 4B and is preferably integral with web 60.

Improved rotary "S" shaped cam member l50 is shown disposed intermediate free-ends l0 and l0′ of brake shoes 4 and 4′ of brake assembly 200 in FIGURE 5. It can immediately be seen that providing cam member l50 with a web shaped configuration in distance "R" of contact with free-ends l0 and l0′ in the brake disengaged condition has enabled free-ends l0 and l0′ (including rollers 24 and 24′) to move towards each other by the distance $2d_1$ - $2d_2$ which in turn has enabled support members 6 and 6′ to pivot about pin 8 and move towards each other to enable the thickness of frictional brake pads 20 and 20′ to be increased to thickness $T_2$ while maintaining initial clearance "C" between pads 20 and 20′ and brake drum 2.

Illustratively, altering the transverse cross section of rotary "S" shaped cam members from the conventional disc shape to a web shaped configuration in previously described distance "R" of contact bridging rotational axis "A" has enabled the breadth or width at the rotational axis "A" to be reduced typically by more than one-half such as a reduction from one inch to l/4 inch.

The ability to substitute the improved rotary "S" shaped cam member having a web like transverse cross section in the region of contact between the brake shoe free-ends in the brake disengaged condition in brake assemblies utilizing conventional rotary "S" shaped cam members enables a substantial and attractive increase in the thickness of frictional brake linings used in the assembly and provides the assembly with an attractively extended working life.

**Claims**

A brake assembly (200) for braking a rotary brake drum (2), comprising two opposed brake shoes each comprising a support member (4, 4′) carrying a brake lining (20, 20′), and a rotary cam member (150) located between free ends (10, 10′) of the two support members (4, 4′), the cam member (150) including a web portion (60) and a flange portion (62, 68) lying in a plane substantially perpendicular to the web portion (60), said cam member (150) having opposed convex camming surfaces (63, 65) thereon of generally spiral form which urge the free ends (10, 10′) of the support members (4, 4′) apart when the cam member (150) is rotated from a rest position, characterised in that said camming surfaces (63, 65) lie exclusively on the opposed major surfaces of the web portion (60) of the cam member (150), and the flange portion (62, 68) of the cam member (150) carries no camming surfaces.

**Patentansprüche**

Eine Bremsanordnung (200) zum Bremsen einer Drehbremstrommel (2) wobei folgendes vorgesehen ist:

zwei entgegengesetzt liegende Bremsschuhe, deren jeder ein einen Bremsbelag (20, 20') tragendes Tragglied (4, 4') und ein Drehnockenglied (150) angeordnet zwischen freien Enden (10, 10') der beiden Tragglieder (4, 4') aufweist, wobei das Nockenglied (150) einen Stegteil (60) und einen Flanschteil (62, 68) umfasst, und zwar in einer Ebene im wesentlichen senkrecht zu dem Stegteil (60) liegend, wobei das Nockenglied (150) entgegengesetzt liegende, konvexe Nockenoberflächen (63, 65) von im ganzen spiralförmiger Gestalt darauf aufweist, welche die freien Enden (10, 10') der Tragglieder (4, 4') auseinander drücken, wenn das Nockenglied (150) aus einer Ruheposition heraus verdreht wird, dadurch gekennzeichnet, daß die Nockenoberfläche (63, 65) ausschließlich auf dem entgegengesetzt liegenden Hauptoberflächen des Stegteil (60) des Nockenglieds (150) liegen, und daß der Flanschteil (62, 68) des Nockenglieds (150) keine Nockenoberfläche trägt.

**Revendications**

Dispositif de frein (200) destiné à freiner un tambour (2) de frein rotatif, comportant deux mâchoires de freins opposées, chacune comportant un organe de support (4, 4') portant une garniture de frein (20, 20'), et un organe rotatif formant came (150) située entre les extrémités libres (10, 10') des deux organes de support (4, 4'), l'organe formant came (150) comprenant une partie d'ame (60) et une partie de membrure (62, 68) située dans un plan sensiblement perpendiculaire à la partie d'âme (60), ledit organe formant came (150) étant pourvu sur lui de surfaces convexes opposées de came (63, 65) ayant une configuration globalement en spirale, qui poussent en les écartant les extrémités libres (10, 10') des organes de support (4, 4') lorsque l'on fait tourner l'organe formant came (150) à partir d'une position de repos, caractérisé en ce que lesdites surfaces de came (63, 65) sont situées exclusivement sur les surfaces principales opposées de la partie d'âme (60) de l'organe formant came (150), et la partie de membrure (62, 68) de l'organe formant came (150) ne porte aucune surface de came.

EP 0 221 750 B1

Fig. 1
PRIOR ART

Fig. 2
PRIOR ART

PRIOR ART
Fig. 3

*Fig. 4A*

PRIOR ART

*Fig. 4B*

*Fig. 4C*

*Fig. 5*